Europäisches Patentamt

European Patent Office

Office européen des brevets

(11) Veröffentlichungsnummer: **0 135 963 B1**

# EUROPÄISCHE PATENTSCHRIFT

(45) Veröffentlichungstag der Patentschrift: **30.10.91**

(51) Int. Cl.5: **A01N 25/14**, C05G 3/00

(21) Anmeldenummer: **84201279.1**

(22) Anmeldetag: **07.09.84**

(54) **In wässrigen Medien dispergierbare granulierte Zusammensetzung von in Wasser schwer- oder unlöslichen Wirkstoffen.**

(30) Priorität: **20.09.83 DE 3333872**

(43) Veröffentlichungstag der Anmeldung:
**03.04.85 Patentblatt 85/14**

(45) Bekanntmachung des Hinweises auf die
Patenterteilung:
**30.10.91 Patentblatt 91/44**

(84) Benannte Vertragsstaaten:
**AT CH DE FR GB LI LU**

(56) Entgegenhaltungen:
**GB-A- 1 399 005**
**US-A- 3 164 516**
**US-A- 3 342 581**
**US-A- 3 639 617**
**US-A- 3 657 446**

(73) Patentinhaber: **NORDDEUTSCHE AFFINERIE AG**
**Alsterterrasse 2**
**W-2000 Hamburg 36(DE)**

(72) Erfinder: **Ploss, Hartmut, Dr.**
**Sierichstrasse 88**
**W-2000 Hamburg 60(DE)**
Erfinder: **Ingwersen, Walter**
**Finkenweg 28**
**W-3043 Schneverdingen(DE)**

(74) Vertreter: **Rieger, Harald, Dr.**
**Reuterweg 14**
**W-6000 Frankfurt am Main(DE)**

**Beschreibung**

Die Erfindung betrifft in wäßrigen Medien dispergierbare granulierte Zusammensetzungen von in Wasser schwer- oder unlöslichen Wirkstoffen, wie Herbizide, Fungizide, Insektizide, Bakterizide, Wachstumsregler oder Düngemittel.

Präparationen in Form von staubarmen Granulaten, die in Wasser schwerlösliche bis unlösliche Wirksubstanzen enthalten und die in Granulatform in wäßrigen Medien dispergierbar sind, haben insbesondere auf dem Gebiet der Kosmetik, Pharmazie und Farbstoff-Präparate Bedeutung. In den letzten Jahren haben solche Wirkstoffgranulate in gewissem Maße auch auf agrarchemischem Gebiet Anwendung gefunden. In CH-PS 533 669 sind granulierte Pigmentpräparationen beschrieben, die als Trägersubstanz Styrol/Maleinsäure-Copolymerisate enthalten. Die Granulate müssen in wäßrigen Medien durch Rühren unter Zusatz von Alkalien dispergiert werden.

Auch die vorbekannten Granulate der DE-OS 28 17 453 enthalten als Trägersubstanz für Pigmente Styrol/Maleinsäure-Harze die zwecks Dispergierung der Wirkstoffe in Wasser mit Basen in die lösliche Form gebracht werden müssen. Auch diese Präparate haben den Nachteil, daß sie in einem Überschuß einer Alkalilösung dispergiert werden müssen. Eine nachträgliche Neutralisation des vorhandenen überschüssigen Alkalis bereitet Schwierigkeiten und kann auch die Qualität der Dispersion wieder verschlechtern, insbesondere tritt aber eine Beschränkung der Anwendungsmöglichkeiten ein.

Aus DE-OS 25 31 426 sind Pflanzenschutzmittel in Form von Tabletten oder Granulaten bekannt, die Stärke als Trägersubstanz und als in Wasser unlöslichen oder quellbaren Stoff enthalten. Diese Präparate zerfallen jedoch nicht in Wasser bzw. sind nicht dispergierbar, sondern geben die Wirksubstanz im wesentlichen proportional der zugeführten Wassermenge ab.

Die aus EP-A 14 503 bekannte, in Wasser dispergierbare granulierte Wirkstoffzusammensetzung, wie Biozid-Granulat, enthält wasserlösliche Salze hochmolekularer Säureharze als Trägersubstanz. Die vorbekannten Granulate können zusätzlich bis zu 50% Stell-, Netz- und Dispergiermittel und andere Zusätze enthalten. Die durch Trocknungsprozesse erzielte Festigkeit der Granulate ist für die praktische Handhabung und für den Einsatz ungenügend. Daher wird nach einer anderen Ausführungsform der Vorveröffentlichung zunächst eine feste Präparation aus der Wirksubstanz und der erforderlichen Menge des wasserlöslichen Säureharzes hergestellt und anschließend das in der festen Präparation enthaltene Säureharz durch Einbringen von gasförmigem Ammoniak oder Dampf eines flüchtigen Amins in ein wasserlösliches Salz übergeführt. Aber auch in diesem Falle stellt sich der zusätzliche Schritt einer alkalischen Behandlung als Nachteil heraus, sowohl was den Zeitaufwand als auch die möglichen chemischen Einschränkungen bei vielen Wirkstoffen betrifft.

Aus der US-PS 3 342 581 sind benetzbare Pulver bekannt, die in Wasser zur Herstellung stabiler und wenig schäumender Dispersionen dispergierbar sind. Diese Pulver können 0,3 bis 25 Gew.% eines Alkalisalzes einer Naphthalinsulfonsäure und 0,3 bis 25 Gew.% eines kapillaraktiven und hydrophilen Stoffes, z.B. Ligninsulfonat, sowie ggf. einen gerüstbildenden Zusatzstoff, z.B. Kieselsäure, enthalten. Granulate, die aus diesem bekannten Pulvergemisch hergestellt wurden, zeigen zwar einen verhältnismäßig geringen Abrieb, sie besitzen aber eine unwirtschaftliche Zerfallsdauer und eine schlechte sowie technisch unbrauchbare Schwebefähigkeit der zu dispergierenden Wirkstoffe.

Die der Erfindung zugrundeliegende Aufgabe besteht daher in der Schaffung von wasserdispergierbaren Granulaten, die die oben erwähnten Nachteile nicht besitzen. Die Erfindung löst diese Aufgabe mit einer in wäßrigen Medien dispergierbaren Zusammensetzung feinteiliger Stoffe, die in Wasser schwer- oder unlösliche Wirkstoffe, mehr als 0,3 Gew.% Dispergiermittel auf Basis von Naphthalinsulfonat und Ligninsulfonat, mehr als 0,3 Gew.% hydrophile Stoffe, ggf. inerte anorganische Füllstoffe, sowie weitere übliche Zusätze enthält. Bei einer granulierten Zusammensetzung der erwähnten Art besteht die Verbesserung gemäß der Erfindung darin, daß die granulatförmige Zusammensetzung neben Wirkstoffen aus der Gruppe Herbizide, Fungizide, Insektizide, Bakterizide, Wachstumsregler und Düngemittel 30 bis 60 Gew.% eines Alkalisalzes einer ggf. alkylsubstituierten Polynaphthalinsulfonsäure als Trägersubstanz (Dispergiermittel), 3 bis 6 Gew.% Polyvinylpyrrolidon als kapillaraktiven und hydrophilen Stoff und 0,1 bis 3 Gew.% eines gerüstbildenden Zusatzstoffes aus der Gruppe der natürlichen oder synthetischen Kieselsäuren, insbesondere pyrogene Kieselsäure, Aluminiumoxid und hochkalziniertes Aluminiumoxid enthält, daß die Komponenten der Zusammensetzung eine Teilchengröße von 0,1 bis 50 μm aufweisen und daß die granulatförmige Zusammensetzung durch Granulation mit Wasser als Granulierflüssigkeit erhalten worden ist. Die Polynaphthalinsulfonate wirken als Netz- bzw. Dispergiermittel, und es ist als überraschend zu bezeichnen, daß ein so hoher Anteil eines wasserlöslichen Stoffes den Granulaten eine große Festigkeit hinsichtlich Transport und Abrieb erteilt unter gleichzeitiger Erzielung eines bemerkenswert raschen Zerfalls in Wasser, gleichmäßiger Dispergierbarkeit und guter Schwebefähigkeit der wasserunlöslichen Wirkstoffe.

Zweckmäßig wird als Trägersubstanz das Natrium- oder Kaliumsalz einer Polynaphthalinsulfonsäure verwendet, wie das Natriumsalz der Naphthalin-mono-, -di-, -tri- oder -tetra-sulfonsäure bzw. deren Gemische. Weiterhin geeignet ist das Kalium- oder Natriumsalz der Isopropylnaphthalinsulfonsäure. Die Trägersubstanzen der erfindungsgemäßen Zusammensetzung sind als hervorragende Dispergiermittel für die Wirkstoffe der erfindungsgemäßen Zusammensetzung geeignet. Derartige Wirkstoffe sind Biozide, wie Fungizide, Insektizide, Bakterizide, sowie Wachstumsregler·und Düngemittel. Die Wirkstoffe, deren Anteil im Granulat im allgemeinen eine Menge von 60 Gew.% nicht übersteigen soll, können einzeln oder in Mischung in der erfindungsgemäßen granulierten Zusammensetzung enthalten sein.

Der hohe Anteil an Polynaphthalinsulfonsäure als Trägersubstanz in der erfindungsgemäßen granulierten Zusammensetzung ermöglicht weiterhin einen Zusatz von Polyvinylpyrrolidon - einem kapillaraktiven hydrophilen Stoff - ohne daß die Granulate beim Einrühren in Wasser verkleben oder agglomerieren und auf diese Weise der Dispergierung entgegenwirken könnten. Durch die hohe Kapillaraktivität des Polyvinylpyrrolidons wird begierig Wasser in das Innere des Granulats gesaugt, wobei der Innendruck (Kapillardruck) die Festigkeitswerte des Granulats übersteigen muß. Je höher die positive Differenz zwischen Kapillardruck und Festigkeitswert des Granulats ist, um so schneller tritt ein spontaner Zerfall des Granulats ein.

Die Wirkung des Polyvinylpyrrolidons in der erfindungsgemäßen granulierten Zusammensetzung kann durch gerüstbildende Zusatzstoffe in einer Menge von 0,1 bis 3 Gew.% verstärkt werden. Als gerüstbildende und eine poröse Struktur bewirkende Zusatzstoffe sind insbesondere pyrogene Kieselsäure, Aluminiumoxid und hochkalziniertes Aluminiumsilikat geeignet.

Es hat sich als besonders vorteilhaft erwiesen, eine Teilchengröße der in der erfindungsgemäßen Zusammensetzung enthaltenen Komponenten von 0,1 bis 50 μm vorzusehen. Dies kann in einfacher Weise durch gemeinsames Vermahlen der Komponenten bewirkt werden.

Eine zweckmäßige biozide granulierte Wirkstoffzusammensetzung besteht beispielsweise aus

| 50 | Gew.% eines Wirkstoffgemisches aus Simazin, Diuron und Atrazin, |
|---|---|
| 43 | Gew.% Natriumpolynaphthalinsulfonat, |
| 5 | Gew.% Polyvinylpyrrolidon, |
| 1,5 | Gew.% Calciumlignosulfonat, |
| 0,5 | Gew.% pyrogene Kieselsäure. |

Die erfindungsgemäßen Wirkstoffgranulate können in an sich bekannter Weise durch einfache Naßgranulierung in einem schnell rotierenden Teller- oder Trommelgranulator bzw. Mischer hergestellt werden. Sie werden hergestellt, indem die feingemahlenen, in Wasser schwerlöslichen bis unlöslichen, z.B. bioziden, Wirkstoffe zusammen mit den kapillaraktiven und hydrophilen und ggf. mit Gerüstsubstanzen versetzten Stoffen mit den Naphthalinsulfonaten gemischt, ggf. zusammen vermahlen, und anschließend unter Hinzusprühen von Wasser in einem Granulator granuliert werden. Als abschließende Trocknung genügt eine einfache Lufttrocknung bzw. Trocknung mittels Wärmezufuhr. Eine spezielle Wirbelschichttrocknung ist nicht erforderlich.

Die erfindungsgemäßen Granulate sind je nach Granulier- dauer und Granuliereigenschaften grobpulverig bis körnig. Sie haben den Vorteil, bei einer genügend hohen mechanischen Festigkeit freifließend, rieselfähig und nicht stäubend zu sein. Beim bloßen Einrühren in Wasser zerfallen sie rasch und dispergieren vollständig, wobei der z.B. biozide Wirkstoff in homogener Suspension vorliegt.

Die Erfindung wird anhand des folgenden Beispiels beispielsweise und näher erläutert.

Beispiel

50 Gewichtsteile eines Wirkstoffgemisches aus Simazin, Diuron und Atrazin werden mit 43 Gewichtsteilen Natriumpolynaphthalinsulfonat, 5 Gewichtsteilen Polyvinylpyrrolidon, 0,5 Gew. Teilen pyrogener Kieselsäure und 1,5 Gew. Teilen Zellpech-Calcium gemischt und auf eine einheitliche Teilchengröße von 40 μm gemahlen.

Dieses Gemisch wird 15 Minuten bei 250 Upm auf einem Trommel-Granulator unter Besprühung mit 15 Gew.-Teilen Wasser granuliert. Nach Erreichen der erwünschten Granulatgröße (0,2-0,8 mm) wird die Granulation unterbrochen und das Produkt durch einfaches Liegenlassen an der Luft getrocknet. Anschließend wird die erwünschte Granulatgröße abgesieht, das Überkorn zerkleinert und zusammen mit dem Unterkorn einer erneuten Granulation zugeführt. Diese Arbeitsweise kann auch kontinuierlich gestaltet werden, wobei auch die Trocknung unter Zufuhr von Wärmeenergie kontinuierlich ausgeführt werden kann. Das erhaltene Produkt zerfällt beim Einrühren in Wasser rasch und dispergiert vollständig. Die Schwebefähigkeit der wasserunlöslichen Wirkstoffe betrug bei einer Wasserhärte von 19 °dH (deutsche Härte) und 30 Minuten 82 % und ist damit für eine praxisgerechte Anwendung ausreichend.

**Patentansprüche**

1. In wäßrigen Medien dispergierbare Zusammensetzung feinteiliger Stoffe, die in Wasser schwer- oder unlösliche Wirkstoffe, mehr als 0,3 Gew.% Dispergiermittel auf Basis von Naphthalinsulfonat und Ligninsulfonat, mehr als 0,3 Gew.% hydrophile Stoffe, gegebenenfalls inerte anorganische Füllstoffe, sowie weitere übliche Zusätze enthält, dadurch gekennzeichnet, daß die granulatförmige Zusammensetzung neben Wirkstoffen aus der Gruppe Herbizide, Fungizide, Insektizide, Bakterizide, Wachstumsregler und Düngemittel

    a) 30 bis 60 Gew.%     eines Alkalisalzes einer ggf. alkylsubstituierten Polynaphthalinsulfonsäure als Trägersubstanz (Dispergiermittel),

    b) 3 bis 6 Gew.%     Polyvinylpyrrolidon als kapillaraktiven hydrophilen Stoff und

    c) 0,1 bis 3 Gew.%     eines gerüstbildenden Zusatzstoffes aus der Gruppe natürlicher oder synthetischer Kieselsäuren, insbesondere pyrogene Kieselsäure, Aluminiumoxid und hochkalziniertes Aluminiumsilikat, enthält,

    d) die Komponenten der Zusammensetzung eine Teilchengröße von 0,1 bis 50 μm aufweisen und

    e) die granulatförmige Zusammensetzung durch Granulation der Stoffzusammensetzung a) bis d) mit Wasser als Granulierflüssigkeit erhalten worden ist.

2. Zusammensetzung nach Anspruch 1, dadurch gekennzeichnet, daß sie aus

    50 Gew.%     eines Wirkstoffgemisches aus Simazin, Diuron und Atrazin,

    43 Gew.%     Natriumpolynaphthalinsulfonat,

    5 Gew.%     Polyvinylpyrrolidon,

    1,5 Gew.%     Calciumlignosulfonat und

    0,5 Gew.%     pyrogener Kieselsäure

besteht.

**Claims**

1. Composition of finely-divided substances which is dispersible in aqueous media, which contains active substances which are sparingly soluble or insoluble in water, more than 0.3% by weight dispersing agent on the basis of naphthalene sulphonate and lignin sulphonate, more than 0.3% by weight hydrophilic substances, optionally inert inorganic fillers, and also further conventional additives, characterised in that the granular composition in addition to active substances from the group herbicides, fungicides, insecticides, bactericides, growth regulators and fertilisers contains

    a) 30 to 60% by weight     of an alkali salt of an optionally alkyl-substituted polynaphthalene sulphonic acid as carrier substance (dispersing agent),

    b) 3 to 6% by weight     polyvinylpyrrolidone as capillary-active hydrophilic substance and

    c) 0.1 to 3% by weight     of a structure-forming additive from the group of natural or synthetic silicic acids, in particular pyrogenic silicic acid, aluminium oxide and highly calcined aluminium silicate,

    d) the constituents of the composition have a particle size of 0.1 to 50 μm and

    e) the granule-like composition has been obtained by granulating the substance composition a) to d) with water as the granulating liquid.

2. Composition according to Claim 1, characterised in that it consists of

    50% by weight     of an active substance mixture of simazine, diuron and atrazine,

    43% by weight     sodium polynaphthalene sulphonate,

    5% by weight     polyvinylpyrrolidone,

    1.5% by weight     calcium lignosulphonate and

    0.5% by weight     pyrogenic silicic acid.

**Revendications**

4

1. Composition, dispersable dans des milieux aqueux, de substances à l'état finement divisé, qui contiennent des substances actives peu solubles ou insolubles dans l'eau, plus de 0,3 % en poids d'un agent dispersant à base de naphtalènesulfonate et de lignosulfonate, plus de 0,3 % en poids de substance hydrophile, le cas échéant des charges minérales inertes, ainsi que d'autres additifs habituels, caractérisée en ce que la composition sous forme de granulés contient, outre des substances actives choisies parmi les herbicides, les fongicides, les insecticides, les bactéricides, les régulateurs de croissance et les engrais

a) de 30 à 60 %   en poids d'un sel de métal alcalin, d'un acide polynaphtalènesulfonique éventuellement à substitution alcoyle, comme substance-support (agent de dispersion),

b) de 3 à 6 %   en poids de polyvinylpyrrolidone comme substance et hydrophile tensio-active, et

c) de 0,1 à 3 %   en poids d'un adjuvant choisi parmi les acides siliciques naturels ou synthétiques, notamment l'acide silicique pyrogène, l'oxyde d'aluminium et le silicate d'aluminium très calciné,

d) les constituants de la composition ont une granulométrie de 0,1 à 50 $\mu$m, et

e) la composition sous forme de granulés a été obtenue en granulant la composition de substances a) à d) par de l'eau servant de liquide de granulation.

2. Composition suivant la revendication 1, caractérisée en ce qu'elle est constituée de

50 % en poids   d'un mélange de substances actives constituées de simazine, de diuron et d'atrazine,

43 % en poids   de polynaphtalènesulfonate de sodium,

5 % en poids   de polyvinylpyrrolidone,

1,5% en poids   de lignosulfonate de calcium, et

0,5% en poids   d'acide silicique pyrogène.